(19) Europäisches Patentamt
European Patent Office
Office européen des brevets

(11) Veröffentlichungsnummer : **0 434 665 B1**

(12) # EUROPÄISCHE PATENTSCHRIFT

(45) Veröffentlichungstag der Patentschrift :
**16.03.94 Patentblatt 94/11**

(51) Int. Cl.$^5$ : **G01M 15/00**

(21) Anmeldenummer : **90890342.0**

(22) Anmeldetag : **19.12.90**

(54) **Verfahren und Einrichtung zur Diagnose von Brennkraftmaschinen.**

(30) Priorität : **22.12.89 AT 2933/89**

(43) Veröffentlichungstag der Anmeldung :
**26.06.91 Patentblatt 91/26**

(45) Bekanntmachung des Hinweises auf die Patenterteilung :
**16.03.94 Patentblatt 94/11**

(84) Benannte Vertragsstaaten :
**BE CH DE DK ES FR GB IT LI NL SE**

(56) Entgegenhaltungen :
**EP-A- 0 153 004**
**GB-A- 2 053 484**
**US-A- 3 921 446**
**US-A- 4 550 595**
**IEEE TRANSACTIONS ON VEHICULAR TECHNOLOGY, vol. VT-31, no. 3, August 1982, New York, US, Seiten 117-124; W.J.Fleming: "Automotive Torque Measurement: A Summary of Seven Different Methods"**

(56) Entgegenhaltungen :
**PROC. OF 39TH IEEE VEHICULAR TECHNOLOGY CONFERENCE; vol. 1, Mai 1989, San Francisco, US, Seiten 423-436; G.Rizzoni et al.: "Crankshaft Position Measurement for Engine Testing, Control, and Diagnosis"**

(73) Patentinhaber : **AVL Gesellschaft für Verbrennungskraftmaschinen und Messtechnik mbH.Prof.Dr.Dr.h.c. Hans List**
**Kleiststrasse 48**
**A-8020 Graz (AT)**

(72) Erfinder : **Koegeler, Hans-Michael, Dipl.-Ing.**
**Zusertalgasse 29**
**A-8010 Graz (AT)**
Erfinder : **Kunzfeld, Wilhelm**
**Stiftingtalstrasse 71**
**A-8010 Graz (AT)**

(74) Vertreter : **Pinter, Rudolf, Dipl.-Ing.**
**Patentanwälte Klein & Pinter OEG**
**Fasangasse 49**
**A-1030 Wien (AT)**

EP 0 434 665 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Diagnoseverfahren für Bennkraftmaschinen, insbesonders für mehrzylindrige Brennkraftmaschinen, wobei fortlaufend Messungen von Betriebskenngrößen, insbesonders von zylinderspezifischen Betriebskenngrößen, durchgeführt und durch Auswertung und Zuordnung der Meßergebnisse die Einzelzylinder-Drehmomente bzw. -Leistungen bestimmt werden. Weiters betrifft die Erfindung auch eine entsprechende Einrichtung zur Diagnose von Brennkraftmaschinen, mit einer Meßanordnung für die fortlaufende Ermittlung von zylinderspezifischen Betriebskenngrößen und einer damit in Verbindung stehenden Auswerteeinrichtung zur Auswertung, Zuordnung und Anzeige von die Einzelzylinder-Leistung repräsentierenden Meßergebnissen.

Verfahren und Einrichtungen der genannten Art sind bekannt, werden aber heutzutage üblicherweise nur bei der Konstruktion und Entwicklung von neuen Brennkraftmaschinen oder deren Teilen eingesetzt. Nachteilig ist bei den bisher bekannten Einrichtungen und Verfahren insbesonders der Umstand, daß die Ermittlung von Einzelzylinder-Leistungen bzw. -Drehmomenten jeweils separate Gasdruckmessungen an den einzelnen Zylindern erfordert - die von der Zeit bzw. vom Kurbelwinkel abhängigen Gasdruckverläufe können dann mit den entsprechenden konstruktiven Größen der Brennkraftmaschine verknüpft auf die gesuchten Leistungen bzw. Drehmomente umgelegt werden. Diese Gasdruckmessungen erfordern einen hohen konstruktiven bzw. montagemäßigen Aufwand und sind zur periodischen Kontrolle bzw. Überprüfung von bereits in Betrieb befindlichen Brennkraftmaschinen nur in den seltensten Fällen durchführbar, da zumeist separate Indizierbohrungen oder dergleichen für die Meßwertaufnehmer vorgesehen werden müßten, was insgesamt der Serienanwendung derartiger Diagnosemöglichkeiten entgegensteht.

Es sind auch Verfahren bekannt, die Näherungsgrößen für die Einzelzylinderleistung aus dem gemessenen Winkelgeschwindigkeitsverlauf bestimmen. So leiten z.B. Schroeder und Thaddens in EP-A-153004 aus gemessenen Musterdruckverläufen, die an dem zu untersuchenden Motortyp nur einmalig aufzunehmen sind, und aktuellen Winkelgeschwindigkeitsmessungen den absoluten Kompressionsenddruck und Einzelzylinderleistungsmaße ab. Nachteilig ist bei dieser Methode der Aufwand zur Beschaffung der gemessenen Druckverläufe sowie die grundsätzliche Einschränkung auf konstante, niedrige Drehzahl, bei der die Massenkraftwirkung noch vernachlässigt werden kann.

Dem Problem der störenden Massenkrafteinflüsse bei höheren Drehzahlen begegnen Raid und Taylor in GB-2053484-A indem sie die Beschleunigungsdrehmomente, die sie aus der gemessenen Winkelbeschleunigung des Schwungrades - für einen Zyklus im Hochlauf und einen Zyklus im Motorauslauf - berechnen, voneinander subtrahieren und die Differenzfläche als ein Maß für die im Zylinder umgesetzute Arbeit hernziehen. Nachteilig ist hierbei die Tatsache, daß dieses Verfahren nur an freilaufenden Motoren durchgeführt werden kann, bei denen ein Hochlauf und ein Auslauf aufgezeichnet werden muß.

Aufgabe der vorliegenden Erfindung ist es, ein Verfahren bzw. eine Einrichtung der eingangs genannten Art so zu verbessern, daß die genannten Nachteile vermieden werden und daß insbesonders auf einfache, kostengünstige und trotzdem relevante Weise Einzelzylinder-Beurteilungen hinsichtlich Leistung bzw. Drehmoment durchgeführt werden können. Diese Beurteilungen sollen insbesonders ohne die Anbringung zusätzlicher Indizierbohrungen oder dergleichen an den Zylindern der Brennkraftmaschine möglich sein, sodaß auch routinemäßige Untersuchungen an Serienmaschinen durchgeführt werden können.

Ein Diagnoseverfahren der eingangs genannten Art ist zur Lösung dieser Aufgabe so ausgebildet, daß - jeweils für definierte Kurbelwinkelstellungen-

a) an zumindest einem Bauteil der Brennkraftmaschine die jeweilige Drehzahl bzw. Winkelgeschwindigkeit $\omega(\alpha)$ gemessen wird,

b) aus den konstruktiven Daten der Brennkraftmaschine ein kurbelwinkelabhängiges Ersatzträgheitsmoment $I(\alpha)$ gebildet wird, das den Einfluß der oszillierenden Massen mit erfaßt, und

c) die jeweilige Gesamtenergie, die in der Brennkraftmaschine gespeichert ist, ermittelt wird, und daß

d) aus dem Vergleich dieser Gesamtenergien in zylinderspezifischen Kurbelwinkelbereichen die Einzelzylinder-Drehmomente bzw. -Leistungen bestimmt werden.

Besonders bevorzugt ist insbesonders, daß im Schritt c) nach der Beziehung $E_{gesamt} = E_{kin} + E_{pot}$ die jeweilige Gesamtenergie, die in der Brennkraftmaschine gespeichert ist, durch die gesamte kinetische Energie angenähert wird, wobei $E_{kin}$ nach der Beziehung $E_{kin} = \frac{I(\alpha)\cdot\omega^2}{2}$ ermittelt wird.

Die Erfindung wird in weiterer Folge am Beispiel eines 4-Zylinder-Motors und an der Hand der Figuren näher beschrieben:

Fig. 1A und Fig. 1B zeigen typische Winkelgeschwindigkeitsverläufe roh und geglättet, und zwar Fig. 1A bei niedriger und Fig. 1B bei hoher Drehzahl.

Fig. 2A und Fig. 2B zeigen die beiden Glättungsschritte, wieder Fig. 2A bei niedriger und Fig. 2B bei hoher Drehzahl.

Fig. 3 zeigt den Verlauf des kurbelwinkelabhängigen Trägheitsmoments.

Fig. 4A und Fig. 4B zeigen berechnete Energiepegelverläufe im Vergleich zu gemessenen Zylinderdruckverläufen - Fig. 4A bei niedriger Drehzahl, Fig. 4B bei hoher Drehzahl.

Fig. 5 unterstützt die Erklärung des "gemischten inneren Mitteldruckes"

Fig. 6 zeigt ein Beispiel einer Geräteausführung."

Die erfindungsgemäße Einrichtung zur Diagnose von Brennkraftmaschinen ist demgemäß so ausgebildet, daß die Meßanordnung eine Meßeinheit zur fortlaufenden Messung der Drehzahl bzw. Winkelgeschwindigkeit der Brennkraftmaschine sowie eine damit in Verbindung stehende Zuordnungseinheit zur Zuordnung der jeweiligen Meßergebnisse zu definierten Kurbelwinkelstellungen der Brennkraftmaschine aufweist, daß die Auswerteeinrichtung eine Speichereinheit aufweist, in der für die definierten Kurbelwinkelstellungen ein jeweiliges Ersatzträgheitsmoment $I(\alpha)$ der Brennkraftmaschine enthalten ist, daß die Auswerteeinheit weiters eine Verknüpfungseinheit umfaßt, in der die jeweilige Gesamtenergie der Brennkraftmaschine ermittelt wird, und daß eine Vergleichseinheit in der Auswerteeinheit vorgesehen ist, in der aus dem Vergleich dieser Gesamtenergien in zylinderspezifischen Kurbelwinkelbereichen die Einzelzylinder-Drehmomente bzw. -Leistungen bestimmt werden. $I(\alpha)$ wird dabei ermittelt an Hand von Motordaten, die eingegeben werden und unter Umständen zwischengespeichert.

Diese "Speichereinheit" für $I(\alpha)$ umfaßt auch Lösungen, bei denen gemäß dem Blockschaltbild der erfindungsgemäßen Einrichtung in Fig. 6 verschiedene weitere Signalaufnahme- bzw. Eingabemöglichkeiten vorgesehen sind, mit deren Hilfe beispielsweise in einer vorgeschalteten Verknüpfungseinheit $I(\alpha)$ ermittelbar ist. Über eine Eingabeeinheit 1 können motortypspezifische Maschinendaten - insbesonders Werte für $I_0$, l, r, $m_{os}$ oder auch pi(n) für die $p_r$ bestimmung im Auslauf der Maschine (siehe Genaueres untenstehend)-eingegeben werden. In der Auswerteeinrichtung 2 wird aus all diesen Daten $I(\alpha)$ ermittelt und in der hier nicht näher bezeichneten Speichereinheit für zumindest eine Periode zwischengespeichert. An Sensoren ist für das erfindungsgemäße Verfahren nur erforderlich eine Meßeinheit 3 zur fortlaufenden Messung der Drehzahl bzw. Winkelgeschwindigkeit der brennkraftmaschine sowie eine Einheit 4 (beispielsweise ein Klemmgeber oder ein Zündspannungssignalgeber) zur Zylindererkennung für die Zuordnung der jeweiligen Meßergebnisse der Einheit 3. Ein Triggermarkengeber ist in Fig. 6 mit 5 bezeichnet. Mit 6 ist ein Öltemperatursensor und mit 7 ein Wassertemperatursensor bezeichnet, die im Zusammenhang mit der untenstehend beschriebenen Ermittlung der Reibung von Bedeutung sind. Mit 8 ist ein Auspufftemperatursensor und mit 9 ein Weggeber für die Stellung des Kraftstoffmengenreglers bezeichnet - mit den Signalen dieser Einheiten kann die mittlere Last, mit der die untersuchte brennkraftmaschine gerade läuft, zumindest angenähert ermittelt werden.

Allgemein mit 10 sind schließlich in Fig. 6 mögliche weitere Sensoren für die Ermittlung des jeweiligen Winkelgeschwindigkeitsverlaufes an anderen Orten des Maschinenstranges bezeichnet, wie sie für die Ermittlung bzw. berücksichtigung der potentiellen Energie erforderlich sind.

In der Verbindung von allen genannten Meßeinheiten bzw. Sensoren mit der Auswerteeinrichtung 2 sind schließlich Einheiten 11 zur Signalaufbereitung eingezeichnet; der Auswerteeinheit 2 nachgeschaltete Ausgabeeinheiten, wie Bildschirm, Drucker, Datenträger, Schnittstellen, usw. sind mit 12 bezeichnet.

Die Erfindung geht damit also davon aus, daß zur Einzelzylinder-Beurteilung hinsichtlich Drehmoment bzw. Leistung nur eine für die jeweiligen dynamischen Verhältnisse am Kurbeltrieb der brennkraftmaschine relevante Drehzahl bzw. Winkelgeschwindigkeit in Abhängigkeit von der Kurbelwinkelstellung der brennkraftmaschine abgenommen zu werden und mit dem wiederum auf den Kurbelwinkel bezogenen jeweiligen Gesamtträgheitsmoment $I(\alpha)$ zur jeweiligen gesamten, in der Maschine gespeicherten, kinetischen Energie verknüpft zu werden braucht. In zylinderspezifischen Kurbelwinkelbereichen der über dem Kurbelwinkel aufgetragenen Gesamtenergie kann diese dann ohne weiteres den einzelnen hauptverursachenden Zylindern zugeordnet werden, sodaß durch entsprechende Vergleiche die Charakteristiken der Einzelzylinder ermittelbar sind.

An konstanten, motortypspezifischen Werten muß dabei nur das Trägheitsmoment aller rotierenden Maschinenteile (reduziert auf die Kurbelwellendrehzahl), das Schubstangenverhältnis (Pleuelstangenlänge und Hub) sowie die Summe der oszillierenden Massen pro Zylinder bekannt sein. Grundsätzlich ist das Verfahren bzw. die entsprechende Einrichtung nach der Erfindung für die Einzelzylinder-Beurteilung im Vollasthochlauf (Vollgasbeschleunigung in einem bestimmten Drehzahlbereich, vorzugsweise (aber nicht notwendigerweise) ohne äußere Belastung der brennkraftmaschine) gedacht; aufgrund der hohen Genauigkeit - insbesonders im niederen Drehzahlbereich - ist es etwa ohne weiteres auch möglich, die Unterschiede zwischen den Zylindern im Leerlauf zu diagnostizieren. Grundsätzlich ist es darüber hinaus auch möglich, während des Motorauslaufes das mechanische Verlustmoment des Motors zu bestimmen bzw. weiters auch während des Vollasthochlaufes den Verlauf des inneren Einzelzylinder-Drehmoments zu ermitteln.

Prinzipiell gilt, daß sich etwa die effektiven Einzelzylinder-Drehmomentverläufe aus der Zunahme der gespeicherten kinetischen Energie durch die Wirkung eines Zylinders ergeben. Betrachtet man die gesamte Brennkraftmaschine als mechanisches, offenes System, so läßt sich die folgende Energiebilanz ansetzen:

$$\triangle (Ekin + Epot) + Wload = Wi - Wf \quad \text{Gl. 1a}$$

bzw. für den frei laufenden Motor:

$$\triangle (Ekin + Epot) = Wi - Wf \quad \text{Gl. 1b}$$

wobei gilt:

Wi mechanische Arbeit der Gasdrücke

Wf mechanische Arbeit der Verlustmomente

Wload nach außen abgegebene mechanische Arbeit. (Bei der freilaufenden Maschine ist Wload = 0)

Ekin innerhalb des Motors gespeicherte kinetische Energie. Sie ist eine Funktion von $\omega$ und $\alpha$.

Epot innerhalb des Motors gespeicherte potentielle Energie. Durch die Verdrehung bzw. Dehnung elastischer Motorelemente wird kurzzeitig auch Energie gespeichert. Dieser Anteil beeinflußt den $\omega$-Verlauf erst bei höherer Drehzahl. Weiters ist die Energie, die auf Grund der geodetischen Höhe der oszillierenden Massen gespeichert wird, hier einzuordnen.

Diese Beziehungen gelten für beliebige Differenzwinkel.

Für Verbrennungskraftmaschinen ist es üblich, Wi bzw. Wf über einen Motorzyklus zu bestimmen und auf das Hubvolumen zu beziehen:

Für einen Einzelzylindermotor läßt sich bei betrachtung eines Kurbelwinkelintervalles von 720° Gleichung 1 in gewohnter Form anschreiben:

$$pe = pi - pf \quad \text{Gl. 1c}$$

pe effektiver Mitteldruck

$$pi = \frac{1}{Vh} \cdot \int_{-\pi}^{+\frac{3\pi}{2}} pgas \cdot dV$$

Vh Hubvolumen eines Zylinders

pgas Gasdruckverlauf im Brennraum eines Zylinders (er wird üblicherweise mit Druckaufnehmern, die in eigenen Indizierbohrungen angebracht sind, gemessen)

bzw.

$$pf = \frac{1}{Vh} \cdot \int_{-\pi}^{+\frac{3\pi}{2}} Mf \cdot d\alpha$$

Mf Drehmoment aller mechanischen Reibverluste im Motor in seiner Wirkung auf das Schwungrad

$\alpha$ Winkellage der Kurbelwelle

Diese Werte gelten jeweils für einen Zylinder. Die gesamte im Motor gespeicherte Energie wird aber von allen Zylindern gemeinsam beeinflußt. Sie besitzen allerdings unterschiedliche Lagen im Arbeitsprozeß.

Für den 4-Zylinder Reihenmotor im 4-Taktverfahren wird daher beispielsweise die Differenz der gespeicherten Energie in einem Intervall von $\triangle\alpha = 720/4 = 180°$ KW durchgeführt. Es ergeben sich dabei "gemischte Mitteldrücke", die grundsätzlich von allen Zylindern, hauptsächlich aber von jenem der sich gerade in einem entscheidenden Teil der Hochdruckschleife befindet, beeinflußt wird. Diese "gemischten Mitteldrücke" werden mit einem * gekennzeichnet. ("j" ist der Index für den betrachteten Zylinder)

$$pe^*_j = \frac{1}{Vh} \Delta(Ekin + Epot)\Big|_{\alpha_j - 180}^{\alpha_j} \quad \text{Gl. 2a}$$

$$pi^*_j = pe^*_j + pf^*_j \quad \text{Gl. 3a}$$

Es kann also aus dem Energiepegelverlauf eine Betriebskenngröße abgeleitet werden, die unter bestimmten Voraussetzungen exakt (siehe unten)-einem "effektiven Mitteldruck", bzw. bei Berücksichtigung der Motorreibung einem "inneren Mitteldruck" eines bestimmten Zylinders entspricht.

Es hat sich in den bisher durchgeführten Versuchen gezeigt, daß der Einfluß der Torsionsschwingungen (Epot) bei der Bestimmung des Energiepegelverlaufes vernachlässigt werden kann, wobei erst bei höheren Drehzahlen merkliche Abweichungen zu den mit Quarzdruckaufnehmern bestimmten Referenzwerten auftraten.

In diesem Fall gilt:

$$pe^*_j = \frac{1}{Vh} \Delta Ekin \Big|_{\alpha_j-180}^{\alpha_j} \quad \text{Gl. 2b}$$

Bei der meßtechnischen Methode der "Energiepegelauswertung" wird im ersten Schritt $\omega$ an einer Stelle gemessen, an der das Trägheitsmoment der Maschine möglichst konzentriert ist, vorzugsweise am Schwungrad. Zusätzlich wird, bevorzugt von einer eigenen Auswerteeinheit mit einem Einspritzleitungsdrucksignal, bzw. einem Zündspannungssignal, ein Zylinder detektiert, in dem gerade eine Verbrennung stattfindet. Die genaue Zuordnung zwischen dem $\omega$-Verlauf und dem Kurbelwinkel $\alpha$ erfolgt vorzugsweise mit einer Triggermarke. In weiterer Folge wird der $\omega$-Verlauf, der sich direkt aus den Meßdaten errechnet, vorzugsweise geglättet. Ist keine Triggermarke vorhanden, kann die Zuordnung des Kurbelwellenwinkels ($\alpha$) zum $\omega$-Verlauf auch an Hand der relativen Minima im $\omega$-Verlauf getroffen werden. Im Leerlauf liegen die relativen Minima des $\omega$-Verlaufes stets in unmittelbarer Nähe von OT.

Mit dieser Information kann die kinetische Energie der oszillierenden Massen mitberücksichtigt und der Verlauf des Energiepegels berechnet werden.

Aus sieben grundsätzlichen Differenzbildungsmethoden wurde jene ausgewählt, bei der die beste Übereinstimmung zwischen $pe^*_j$ und dem entsprechenden, z.B. mit Quarzdruckaufnehmern ermittelten, $pe_j$ erreicht werden konnte.

Die Drehzahlerfassung erfolgt vorzugsweise über die Zähne des Zahnkranzes, die als Winkelmarken verwendet werden. Die Winkelgeschwindigkeit ergibt sich aus $\omega = \frac{\Delta\alpha}{\Delta t}$

$\Delta\alpha$ (= z.B. 3,33° bei beispielsweise 108 Zähnen)
$\Delta t$ Zeitdifferenz zwischen zwei Zähnen.

Ein Datenerfassungsgerät interpoliert innerhalb dieser Winkelschritte z.b. noch auf eine Meßauflösung von 1° KW.

Der Zahnkranz des Schwungrades weist aber gewisse Fertigungstoleranzen auf und auch die Zeitmessung wird in diskreten Schritten (z.B. von ganzen $\mu$sec) durchgeführt. Daraus ergibt sich üblicherweise ein hochfrequentes Rauschen auf dem $\omega$-Verlauf.

Fig. 1 zeigt ein beispiel für den -Verlauf über dem Kurbelwinkel $\alpha$, wie er sich direkt aus den aufgenommenen Meßdaten darstellt, im Vergleich zu einem beispielsweise aus den auf konventionelle Weise aufgenomenen Gasdrücken in den Zylindern berechneten $\omega$-Verlauf (1A bei einer Drehzahl von 770/min, 1B bei 3740/min). Nach einer Glättung, z.B. mit Hilfe der gleitenden Mittelwertbildung (über ± 5 Punkte), ergibt sich ein bereits sehr verbesserter Verlauf. Nach z.B. einer zweiten Glättung gleicher Art kann der $\omega$-Verlauf zur Auswertung mit Hilfe des "Energiepegelalgorithmus" herangezogen werden (siehe dazu Fig. 2-2A wieder für 770/min; 2B für 3740/min).

Aus dem $\omega$-Verlauf kann nun im Leerlauf die Winkellage der oberen Totpunkte ermittelt werden: Für eine praktisch untersuchte Brennkraftmaschine lag das relative Minimum des $\omega$-Verlaufes im Gutzustand stets bei 1° KW nach OT.

Auch im Schlechtzustand lag dieses Minimum innerhalb von +1bis +4° KW nach OT, obwohl Zylinder 3 beispielsweise bereits mit ca. 33% der Vollast betrieben und Zylinder 4 geschleppt wurde, und somit nicht mehr direkt vom Leerlauf gesprochen werden kann. Ein entsprechendes Auswertegerät kann dabei auch im Leerlauf auf diese Weise die OT-Lage erkennen bzw. einregeln. Bei den durchgeführten Messungen wurde die OT-Lage mit einer Triggermarke erfaßt. Ist die OT-Lage eines Zylinders (auf welche Weise auch immer) bekannt, so kann die im Motor gespeicherte kinetische Energie berechnet werden: Die Berücksichtigung der oszillierenden Massen erfolgt dabei durch die Einführung eines winkelabhängigen Ersatzträgheitsmomentes, das den Einfluß der oszillierenden Massen berücksichtigt. Allgemein gilt für die n-Zylinder Hubkolbenmaschine:

$$I_{(\alpha)} = I_0 + Ios_{(\alpha)}$$

$I_0$ Trägheitsmoment aller rotierenden Motorteile

Ios fiktiver Trägheitsmomentenanteil zur Berücksichtigung der oszillierenden Massen.

Ansatz:

$$Ios \cdot \frac{\omega^2}{2} = \sum_{j=1}^{n} mos_j \cdot \frac{\dot{x}_j^{\,2}}{2}$$

bzw. Ansatz für den Zylinder $_j$:

$$Ios_j(\alpha_j) \cdot \frac{\omega^2}{2} = mos_j \cdot \frac{\dot{x}_j^2(\alpha_j)}{2}$$

$$Ios_j(\alpha_j) = mos_j \frac{\dot{x}_j^2(\alpha_j)}{\omega^2}$$

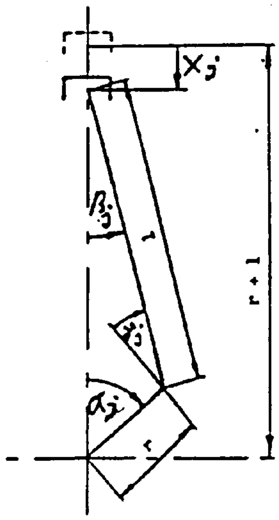


$$\dot{x}_j(\alpha_j) = \frac{dx(\alpha_j)}{d\alpha_j} \cdot \omega$$

$$x_j(\alpha_j) = l + r - (l \cos ß_j + r \cos\alpha_j)$$

$$\text{mit: } \sin ß_j = \frac{r}{l} \sin\alpha_j = \lambda . \sin\alpha_j$$

$$\text{und } \cos^2 ß_j + \sin^2 ß_j = 1$$

$$\rightarrow \cos ß_j = \sqrt{1 - \lambda^2 \sin^2\alpha_j}$$

$$x_j(\alpha_j) = r(1-\cos\alpha_j) + l\,(1-\sqrt{1-\lambda^2 \cdot \sin^2\alpha_j})$$

$$\dot{x}_{j(\alpha_j)} = \omega \left(r \cdot \sin\alpha_j + \frac{l \cdot \lambda^2 \cdot \sin\alpha_j \cdot \cos\alpha_j}{\sqrt{1-\lambda^2 \cdot \sin^2\alpha_j}}\right)$$

$$Ios_{j(\alpha_j)} = mos_j \cdot \left(r \cdot \sin\alpha_j + \frac{l \cdot \lambda^2 \cdot \sin\alpha_j \cdot \cos\alpha_j}{\sqrt{1-\lambda^2 \cdot \sin^2\alpha_j}}\right)^2$$

Für eine n-zylindrige Hubkolbenmaschine wirkt die Summe aller oszillierenden Trägheitsmassen unter Berücksichtigung der jeweiligen Phasenlage der Kurbelkröpfung $\alpha_j$

$$Ios_{(\alpha)} = \sum_{j=1}^{n} \left[ mos_j \cdot \left(r \cdot \sin\alpha_j + \frac{l \cdot \lambda^2 \cdot \sin\alpha_j \cdot \cos\alpha_j}{\sqrt{1-\lambda^2 \cdot \sin^2\alpha_j}}\right)^2 \right]$$

mos oszillierende Masse pro Zylinder

r halber Hub

l Pleulstangenlänge

$\lambda = \frac{r}{l}$

$\alpha_j$ = Kurbelwinkel des Zylinder j

Fig. 3 zeigt beispielsweise den Verlauf dieses Trägheitsmomentes I ($\alpha$) einer konkreten Maschine als Funktion des Kurbelwinkels $\alpha$. Es ist unabhängig von der Drehzahl.

Der Energiepegelverlauf ergibt sich aus

$$E_{kin\,(\alpha)} - I_{(\alpha)} \cdot \frac{\omega^2}{2} \quad \text{Gl. 4}$$

Fig. 4 zeigt ein Beispiel dieses Energiepegel-Verlaufs im Vergleich zu den auf konventionelle Weise gemessenen Zylinderdruckverläufen p und zwar wieder bei niedriger (Fig. 4A) und bei hoher Drehzahl (Fig. 4B). Die Wirkung der einzelnen Zylinder läßt sich an den Differenzen im Energiepegelverlauf erkennen.

Die Differenzenbildung kann dabei grundsätzlich auf sieben unterschiedlichen Arten erfolgen:

1. Betrachtung der Maxima
   1.a) Differenz zwischen zwei aufeinanderfolgenden relativen Maxima
   1.b) Differenz zwischen dem einen Maximum und dem 180° KW davor liegenden Energiepegelwert
   1.c) Differenz zwischen einem Maximum und dem 180° KW später liegenden Energiepegelwert
2. Betrachtung der Minima
   2.a) Differenz zwischen zwei aufeinanderfolgenden relativen Minima
   2.b) Differenz zwischen einem Minimum und dem 180° KW davor liegenden Energiepegelwert
   2.c) Differenz zwischen einem Minimum und dem 180° KW später liegenden Energiepegelwert
3. Vergleich der Energiepegelwerte in den oberen Totpunkten

Während die Methoden 1.a) bis 1.c) deutlich ungenauere Ergebnisse brachten, sind die Methoden 2.a) bis 2.c) und 3. ungefähr gleich genau. Die beste Übereinstimmung wurde mit der Methode 2.b) erreicht.

Die genannten "gemischten Mitteldrücke" $pe^*_j$ bzw. $pi^*_j$ lassen sich folgendermaßen darstellen:
Während der Bestimmung des Einzelzylinder-Drehmomentes - beispielsweise von Zylinder 1 - befinden sich bei einer 4-Zylinder Reihenmaschine (Zündfolge: 1, 2, 4, 3)

in der Kompression : Zylinder 2,
in der Expansion : Zylinder 1,
beim Ausschieben : Zylinder 3 und
beim Ansaugen : Zylinder 4.

Alle Druckverläufe gemeinsam beeinflussen die Drehbewegung des Schwungrades.

Die gemessenen Zylinderdruckverläufe für dieses beispiel sind in Fig. 5 in Form eines p-V-Diagrammes dargestellt. Punktiert ist der Druckverlauf für den gesamten Zyklus von Zylinder 1 eingetragen. Weiters bedeutet der Bereich von S1 bis E1 Start und Ende des Gasdruck-Einflusses von Zylinder 1, der Bereich von S2 bis E2 Start und Ende des Gasdruck-Einflusses von Zylinder 2, S4 bis E4 Start und Ende des Gasdruck-Einflusses von Zylinder 4 und S3 bis E3 Start und Ende des Gasdruck-Einflusses von Zylinder 3. Mit A ist der Expansionshub von Zylinder 1 gekennzeichnet, mit B der Kompressionshub von Zylinder 2, mit C der Auspuffhub von Zylinder 3 und mit D der Einlaßhub von Zylinder 4.

Man sieht, daß sich der punktiert eingetragene Verlauf von Zylinder 1 bis auf kleine Unterschiede im Ladungswechsel mit den entsprechenden Teilen der Druckverläufe der Zylinder 2, 3 und 4 deckt. Wären sie absolut identisch, so wäre pi* definitionsgemäß gleich pi. Es wird somit bei der hier betrachteten, erfindungsgemäßen Einzelzylinder-Drehmomentbestimmung mit Hilfe der Energiepegelmethode davon ausgegangen, - daß der Kompressionsdruckverlauf für alle Zylinder ähnlich ist

- und daß im Ladungswechsel keine großen Unterschiede zwischen den einzelnen Zylindern bestehen.

Diese sogenannte Energiepegelmethode ist weiters auch in der Lage, während des Motorauslaufes den effektiven gemischten Mitteldruck (pe*) jedes einzelnen Zylinders in jedem Motorzyklus zu bestimmen:

$$pe^*_j = pi^*_j - pf^*_j \quad \text{Gl. 3a}$$

$pi^*_j$ ist im Motorauslauf negativ und setzt sich hauptsächlich aus den Verlusten im Ladungswechsel und den Wandwärmeverlusten während der Hochdruckschleife zusammen. Im Rahmen einer Motorreibungsuntersuchung kann $pi^*_j$ für jeden Zylinder j in einmaliger motortypspezifischer Form als Funktion der Motordrehzahl und der Motortemperatur bestimmt werden. Mit dieser Information kann der Verlauf des Reibmitteldruckes $pf^*_j$ während des Motorauslaufes motorspezifisch ermittelt werden.

Die Energiepegelmethode liefert grundsätzlich $pe^*_j$ bzw. Me*. Hat man im Motorauslauf $pf^*_j$ bzw. $Mf^*_j$ als Funktion der Drehzahl bestimmt, so kann in einem darauffolgenden Motorhochlauf oder auch im Leerlauf $pi^*_j$ bzw. $Mi^*_j$ errechnet werden:

$$Mi^*_j = Me^*_j + Mf^*_j \quad \text{Gl. 3b}$$

Dabei wird die Lastabhängigkeit von Mf wieder vernachlässigt, was sich als zumeist durchaus zulässig erwiesen hat. Mit Hilfe von Mi* kann dann beispielsweise die eingespritzte Kraftstoffmenge ohne Einfluß der Motorreibung beurteilt werden.

Weiters kann aus dem Energiepegelverlauf auch eine Differenz gebildet werden, die einen Teil der Kompressionsarbeit, bzw. einen Teil der Expansionsarbeit eines Zylinders repräsentiert (z.B.: Fig. 4 A, Amplitude A). Findet keine Verbrennung statt, also im Auslauf oder bei geschlepptem Motor, kann dieses Maß sehr gut zum Vergleich der relativen Kompression der Zylinder herangezogen werden. Auch im Fall der Verbrennung kann mit der Amplitude B (Fig. 4 A) fortlaufend überprüft werden, ob die Bedingung gleichmäßiger Kompression erfüllt ist.

Das bisherige Gesagte bezieht sich grundsätzlich auf freilaufende Brennkraftmaschinen. In Gleichung 1a ist aber der Fall der belasteten Maschine mit $W_{load}$ bereits berücksichtigt. Messungen an belasteten Maschinen haben bestätigt, daß sich die -Verläufe in entsprechender Form darstellen. Der relative Kompressions-, bzw. Drehmoment-, bzw. Leistungsanteil eines Zylinders läßt sich also an der belasteten Maschine in gleicher Art und Weise bestimmen. Wird darüber hinaus auch die mittlere Last der Maschine - z.B. aus der Abgastemperatur oder aus der Gashebelstellung in Verbindung mit der Drehzahl und einem entsprechenden motortypischen Kennfeld, das einmalig auf einem Motorprüfstand bestimmt wurde - angenähert, so kann das effektive Einzelzylinderdrehmoment, bzw. die effektive Einzelzylinderleistung, wieder absolut angegeben werden:

$$pe^*_j = \frac{1}{Vh} \, ( \Delta (Ekin \Big|_{\alpha_j - \Delta\alpha}^{\alpha_j} + Wload) \;\ldots\; Gl.2c$$

In Ekin ist dabei natürlich die kinetische Energie des gesamten Antriebsstranges zu berücksichtigen.

Die potentiell gespeicherte Energie wird gegebenenfalls folgendermaßen berücksichtigt:

$$pe^*_j = \frac{1}{Vh} \cdot \Delta\,(Ekin + Epot) \Big|_{\alpha_j - \Delta\alpha}^{\alpha_j} + Wload \;\ldots\ldots\ldots\; Gl.2d$$

Unter Epot wird dann die Summe aus Epot h (infolge der geodetischen Höhe der oszillierenden Massen) und Epot c (die noch nicht berücksichtigte Federspeicherenergie in den elastischen Maschinenelementen) erfaßt:

$$Epot = Epot\,h + Epot\,c \quad Gl.\,7$$

Ist der Anteil der geodätischen Höhe der oszillierenden Massen von Einfluß, so wird für die n-Zylinder Hubkolbenmaschine

$$Epot\,h = g \sum_{j=1}^{n} mos_j \cdot h_j(\alpha_j) \;\ldots\ldots\ldots\ldots\ldots\ldots\; Gl.6$$

$h_j$ = geodätische Höhe des Schwerpunkte der oszillierenden Massen im Zylinder j

im Energiepegelverlauf eingerechnet.

Die Berücksichtigung von Drehschwingungen in der Brennkraftmaschine oder im gesamten Antriebsstrang erfolgt vorzugsweise durch Aufspaltung des winkelabhängigen Maschinenträgheitsmomentes in zwei bis endlich viele (n) repräsentative Teilträgheitsmomente, wobei an jedem dieser Orte k der Verlauf $\omega(t)$ gemessen wird. (Dadurch ändert sich auch Ekin)

Die Federkonstanten der masselos gedachten, elastischen Verbindungselemente müssen bekannt sein, um den Energiepegel vollständig bestimmen zu können.

Dämpfungen brauchen nicht angesetzt zu werden, da die entsprechenden Verluste zum Reibungsverlust gezählt werden und damit dem Pegel der gespeicherten Energie nicht mehr angehören: Ansatz elastisch:

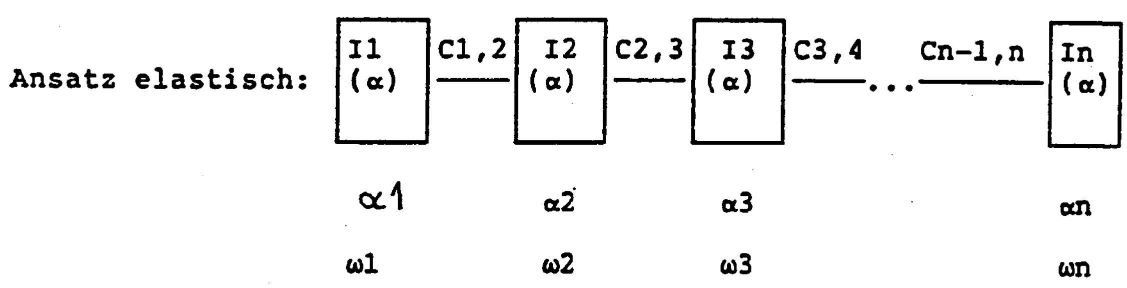

$$I(\alpha) = \sum_{i=1}^{n} Ii(\alpha)$$

$$Eges(\alpha_i) = Ekin + Epot\ c = \sum_{i=1}^{n} I_{i(\alpha i)} \cdot \frac{\omega_i^2}{2} + \sum_{i=2}^{n} C_{i-1,i} \frac{(\alpha_i - \alpha_{i-1})^2}{2} \quad ..Gl.8$$

Zur eingangs angesprochenen, bekannten Bestimmung des inneren Einzelzylinder-Drehmomentes zur Überprüfung des erfindungsgemäßen Verfahrens wurde der Zylinderkopf an jedem Zylinder mit einem Quarzdruckaufnehmer für den Gasdruckverlauf ausgerüstet. Die Winkelsignale für die ω-Messung wurden mit Hilfe eines induktiven Gebers erzeugt. Er wurde in einem Abstand von ca 2 mm über dem Kopfkreis des Zahnkranzes montiert. Um indizierte Mitteldrücke berechnen zu können, muß einem gemessenen Druckverlauf möglichst genau die Winkellage des Kompressions-OT zugeordnet werden. Ein Fehler von 1° Kurbelwinkel hat dabei bereits einen pi-Fehler in der Größenordnung von 10 % zur Folge. Daher wurde mit einem zweiten induktiven Geber auch ein OT- bzw. Triggersignal aufgenommen. Das Signal wurde durch den Vorbeigang eines Blechplättchens erzeugt, das am Schwungrad montiert war. Eine Justierung dieses Blättchens war über Langlöcher möglich.

Die genaue Lage des Kompressions-OT wurde zusätzlich mit Hilfe seines kapazitiven OT-Sensors bestimmt und danach das Blättchen justiert. Die Genauigkeit dieses kapazitiven OT-Sensors ist besser als ± 0,1° Kurbelwinkel.

Die Quarzdruckaufnehmer waren über vier separate Ladungsverstärker an ein Hochgeschwindigkeitsdatenerfassungsgerät angeschlossen. Die Spannungssignale (± 10 V) der induktiven Drehzahlgeber wurden ebenfalls von diesem Gerät aufgenommen.

Die erzeugten Meßfiles wurden auf einem PC (AT - 386) weiter verarbeitet.

Vergleicht man die ermittelte Winkelbeschleunigung aus einem gewöhnlichen Vollasthochlauf mit jener aus einem zweiten Hochlauf, bei dem eine bekannte Zusatzschwungmasse am Schwungrad montiert wurde, so läßt sich aus

$$Me = I_0\dot{\omega}_0 = (I_0 + I_1)\,\dot{\omega}_1$$

das Trägheitsmoment des Motors $I_0$ berechnen:

$$I_0 = \frac{I_1\,\dot{\omega}_1}{\dot{\omega}_0 - \dot{\omega}_1}$$

$I_1$ bekanntes Trägheitsmoment der Zusatzschwungmasse

$M_e$ effektives Motordrehmoment aller Zylinder

Mit Hilfe von statistischen Verfahren kann aus mehreren (z.B. fünf) Wiederholungen dieser Messung auch ein Bereich angegeben werden, in dem sich das wahre Motorträgheitsmoment mit 95 %-iger Wahrscheinlichkeit befindet.

Ein möglicher Fehler dieses Verfahrens liegt dabei aber in der Annahme, daß das Motordrehmoment sowohl im raschen als auch im langsameren Vollasthochlauf (mit Zusatzschwungmasse) die gleiche Funktion der Drehzahl wäre. Trotz der mechanischen Blockierung von den förderdruckabhängigen Regelelementen der Einspritzpumpe (Spritzversteller und Vollastmengenregelung) ist das Drehmoment beim langsameren Hochlauf vermutlich etwas größer.

Daher wurde folgende Vorgangsweise gewählt: Trägheitsmoment und Vertrauensbereiche wurden mit drei verschiedenen Zusatzschwungmassen bestimmt. Die Abhängigkeit der Ergebniswerte von der Größe der Zusatzschwungmasse wurde über Regressionsgeraden auf den Wert der Zusatzschwungmasse 0 extrapoliert: Das Motorträgheitsmoment der hier als Beispiel betrachteten Maschine mit allen rotierenden Massen - reduziert auf Kurbelwellendrehzahl - und ohne Kupplung lag demnach mit 95 %-iger Wahrscheinlichkeit zwischen 0,293 $kgm^2$ und 0,3257 $kgm^2$. Der Mittelwert beträgt 0,3087 $kgm^2$.

Dieser Mittelwert erwies sich in der ω-Simulationsrechnung als zu niedrig: der berechnete ω-Verlauf stieg deutlich stärker an als der gemessene.

Mit I = 0.3155 $kgm^2$ wurde für den berechneten ω-Verlauf die gleiche mittlere Winkelbeschleunigung erhalten wie für den gemessenen.

Zur Simulation einer Fehlfunktion wurde in die Einspritzleitung zur Düse des Zylinders 4 eine Abzweigung eingebaut. An dieser Abzweigung wurde eine zweite Einspritzdüse angeschlossen.

Durch Verstellen des Öffnungsdruckes dieser Düse konnte die Einspritzmenge und damit die Einzelzylinder-Leistung von Zylinder 4 geändert werden.

## Patentansprüche

1. Diagnoseverfahren für Bennkraftmaschinen, insbesonders für mehrzylindrige Brennkraftmaschinen, wobei fortlaufend Messungen von Betriebskenngrößen, insbesonders von zylinderspezifischen Betriebskenngrößen, durchgeführt und durch Auswertung und Zuordnung der Meßergebnisse die Einzelzylinder-Drehmomente bzw. -Leistungen bestimmt werden, und wobei - jeweils für definierte Kurbelwinkelstellungen -
   a) an zumindest einem Bauteil der Brennkraftmaschine die jeweilige Drehzahl bzw. Winkelgeschwindigkeit $\omega(\alpha)$ gemessen wird,
   b) aus den konstruktiven Daten der Brennkraftmaschine ein kurbelwinkelabhängiges Ersatzträgheitsmoment $I(\alpha)$ gebildet wird, das den Einfluß der oszillierenden Massen mit erfaßt, und
   c) die jeweilige Gesamtenergie, die in der Brennkraftmaschine gespeichert ist, ermittelt wird, und daß
   d) aus dem Vergleich dieser Gesamtenergien in zylinderspezifischen Kurbelwinkelbereichen die Einzelzylinder-Drehmomente bzw. -Leistungen bestimmt werden.

2. Diagnoseverfahren nach Anspruch 1, dadurch gekennzeichnet, daß im Schritt c) nach der Beziehung $E_{gesamt} = E_{kin} + E_{pot}$ die jeweilige Gesamtenergie, die in der Brennkraftmaschine gespeichert ist, durch die gesamte kinetische Energie angenähert wird, wobei $E_{kin}$ nach der Beziehung $E_{kin} = \frac{I(\alpha)\cdot\omega^2}{2}$ ermittelt wird.

3. Diagnoseverfahren nach Anspruch 1 oder 2 für Brennkraftmaschinen mit einem an einem Ende der Kurbelwelle angeordneten und einen Starter-Zahnkranz aufweisenden Schwungrad, dadurch gekennzeichnet, daß die Winkelgeschwindigkeit im Schritt a) am Zahnkranz des Schwungrades gemessen wird, vorzugsweise durch berührungslose, induktive Näherungsmessung.

4. Diagnoseverfahren nach einem der Ansprüche 1 bis 3, dadurch gekennzeichnet, daß die Zuordnung der gemessenen Drehzahl bzw. Winkelgeschwindigkeit zum jeweiligen Kurbelwinkel mittels einer Kurbelwellen-Triggermarke und einem Zünd- bzw. Einspritzsignal erfolgt.

5. Diagnoseverfahren nach einem der Ansprüche 1 bis 3, dadurch gekennzeichnet, daß das Auftreten von charakteristischen Kurbelwinkelstellungen, vorzugsweise des OT, aus dem Winkelgeschwindigkeitsverlauf bestimmt wird.

6. Diagnoseverfahren nach einem der Ansprüche 1 bis 5, dadurch gekennzeichnet, daß die Messung im Schritt a) im Vollast-Hochlauf der freilaufenden Brennkraftmaschine durchgeführt wird.

7. Diagnoseverfahren nach einem der Ansprüche 1 bis 5, dadurch gekennzeichnet, daß die Messung im Schritt a) im Auslauf der freilaufenden Brennkraftmaschine durchgeführt wird und/oder dabei die zylinderspezifische Maschinenreibung vorzugsweise unter zusätzlicher Berücksichtigung von motortypischen Verlusten im Gasdruckverlauf, die einmalig für einen Motortyp auf einem Prüfstand bestimmt werden, ermittelt wird.

8. Diagnoseverfahren nach einem der Ansprüche 1 bis 5, dadurch gekennzeichnet, daß die Messung im Schritt a) an einer freilaufenden Brennkraftmaschine bei beliebigen Betriebszuständen bzw. Betriebszustandsänderungen durchgeführt wird.

9. Diagnoseverfahren nach den Ansprüchen 6 und 7, dadurch gekennzeichnet, daß die Einzelzylinder-Drehmomente bestimmt werden, die in Summe zumindest näherungsweise dem inneren Motordrehmoment entsprechen.

10. Diagnoseverfahren nach einem der Ansprüche 1 bis 9, dadurch gekennzeichnet, daß die Messung an einer belasteten Brennkraftmaschine durchgeführt wird, wobei zusätzlich die durchschnittliche Motorlast für die Bestimmung der Absolutwerte der Einzelzylinder-Drehmomente bestimmt wird.

11. Diagnoseverfahren nach einem der Ansprüche 1 bis 10, dadurch gekennzeichnet, daß die Meßwerte für Drehzahl bzw. Winkelgeschwindigkeit vor der weiteren Verarbeitung aufbereitet, vorzugsweise im zeitlichen Verlauf geglättet, werden.

12. Diagnoseverfahren nach einem der Ansprüche 1 bis 11, dadurch gekennzeichnet, daß definierte Kurbelwinkelstellungen im Abstand von 1° verwendet werden.

13. Diagnoseverfahren nach einem der Ansprüche 1 bis 12 dadurch gekennzeichnet, daß die gespeicherte Gesamtenergie im Schritt c) als $E_{gesamt} = E_{kin} + E_{pot}$ bestimmt wird, wobei in $E_{pot}$ das Drehschwingungsverhalten der Maschine als Federspeicherenergie in den elastischen Motorelementen und/oder die geodetische Höhe der oszillierenden Massen berücksichtigt wird.

14. Diagnoseverfahren nach einem der Ansprüche 1 bis 13, dadurch gekennzeichnet, daß aus dem Verlauf der gespeicherten Energie Betriebskenngrößen für die relative Kompression ermittelt und beim Vergleich nach Schritt d) berücksichtigt werden.

15. Einrichtung zur Diagnose von Brennkraftmaschinen, mit einer Meßanordnung für die fortlaufende Ermittlung von zylinderspezifischen Betriebskenngrößen, welche eine Meßeinheit zur fortlaufenden Messung der Drehzahl bzw. Winkelgeschwindigkeit der Brennkraftmaschine sowie eine damit in Verbindung stehende Zuordnungseinheit zur Zuordnung der jeweiligen Meßergebnisse zu definierten Kurbelwinkelstellungen der Brennkraftmaschine aufweist, und einer damit in Verbindung stehenden Auswerteeinrichtung zur Auswertung, Zuordnung und Anzeige von die Einzelzylinderleistung repräsentierenden Meßergebnissen, welche eine Speichereinheit aufweist, in der für die definierten Kurbelwinkelstellungen ein jeweiliges Ersatzträgheitsmoment $I(\alpha)$ der Brennkraftmaschine enthalten ist, und wobei die Auswerteeinrichtung weiters eine Verknüpfungseinheit umfaßt, in der die jeweilige Gesamtenergie der Brennkraftmaschine ermittelt wird, und eine Vergleichseinheit in der Auswerteeinheit vorgesehen ist, in der aus dem Vergleich dieser Gesamtenergien in zylinderspezifischen Kurbelwinkelbereichen die Einzelzylinder-Drehmomente bzw. -Leistungen bestimmt werden.

16. Einrichtung nach Anspruch 15, für Brennkraftmaschinen mit einem an einem Ende der Kurbelwelle angeordneten und einen Starter-Zahnkranz aufweisenden Schwungrad, dadurch gekennzeichnet, daß im Bereich des Zahnkranzes des Schwungrades der zu untersuchenden Brennkraftmaschine ein mit den Zähnen zusammenwirkender Winkelgeschwindigkeitssensor, vorzugsweise ein berührungslos arbeitender, induktiver Näherungssensor, angeordnet und mit der Meßeinheit verbunden ist.

17. Einrichtung nach Anspruch 16, dadurch gekennzeichnet, daß zusätzlich ein OT-Sensor am Schwungrad vorgesehen und mit der Zuordnungseinheit verbunden ist.

18. Einrichtung nach einem der Ansprüche 15 bis 17, dadurch gekennzeichnet, daß zwischen Meß- bzw. Zuordnungseinheit und Auswerteeinrichtung eine Aufbereitungseinheit für das Meßsignal eingeschaltet ist.

19. Einrichtung nach einem der Ansprüche 15 bis 18, dadurch gekennzeichnet, daß die zu untersuchende Brennkraftmaschine mit einer Belastungsanordnung zur Beaufschlagung mit einer, vorzugsweise jeweils bekannten, Last verbunden ist.

20. Einrichtung nach einem der Ansprüche 15 bis 19, dadurch gekennzeichnet, daß eine separate Anordnung zur Bestimmung der relativen Kompression der einzelnen Zylinder an der Brennkraftmaschine vorgesehen und mit der Auswerteeinrichtung verbunden ist.

## Claims

1. Diagnostic method for internal combustion engines, in particular for multi-cylinder engines, in which continuous measurements are made of operating magnitudes, in particular cylinder-specific magnitudes, and by evaluation and association of the measured results the individual cylinder torques and performances are determined, and in which, for respective defined crankshaft positions,
   a) on at least one component of the engine the respective rotational speed or angular velocity $\omega(\alpha)$ is measured,
   b) from the design data of the engine a substitute moment of inertia $I(\alpha)$ dependent on crankshaft position is formed, incorporating the influence of the oscillating masses, and
   c) the prevailing total energy which is stored in the engine is obtained, and that

d) the individual cylinder torques and performances are determined from this comparison of these total energies in cylinder-specific crankshaft angle ranges.

2. Diagnostic method according to claim 1 characterised in that, in the step c), in accordance with the relationship $E_{total} = E_{kin} + E_{pot}$ the respective total energy which is stored in the engine is approached by the overall kinetic energy, $E_{kin}$ being determined in accordance with the relationship $E_{kin} = \frac{I(\alpha)\,\omega^2}{2}$.

3. Diagnostic method according to claim 1 or 2 for engines with a flywheel which is mounted on one end of the crankshaft and has a starter ring, characterised in that the angular velocity in step a) is measured at the starter ring of the flywheel, preferably by contactless inductive proximity measurement.

4. Diagnostic method according to one of claims 1 to 3 characterised in that the association of the measured rotational speed or angular velocity with the respective crank angle is achieved by means of a crankshaft trigger mark and an ignition or injection signal.

5. Diagnostic method according to one of claims 1 to 3 characterised in that the occurrence of characteristic crankshaft angular positions, preferably TDC, is determined from the course of the angular velocity.

6. Diagnostic method according to one of claims 1 to 5 characterised in that the measurement in step a) is performed at full-load high speed of the free-running engine.

7. Diagnostic method according to one of claims 1 to 5 characterised in that the measurement in step a) is performed in the run-down of the free-running engine and/or thereby the cylinder specific engine friction is obtained, preferably while additionally taking into account losses specific to the type of engine in the course of the gas pressure, determined once and for all for an engine type on a test bench.

8. Diagnostic method according to one of claims 1 to 5 characterised in that the measurement in step a) is performed on a free-running engine with any desired operating conditions or alterations in operating conditions.

9. Diagnostic method according to claims 6 and 7 characterised in that the individual cylinder torques are determined, corresponding in total at least approximately to the internal engine torque.

10. Diagnostic method according to one of claims 1 to 9 characterised in that the measurement is carried out on an engine under load, and in addition the average engine load is determined for determination of the absolute values of the individual cylinder torques.

11. Diagnostic method according to one of claims 1 to 10 characterised in that the measured values for rotational speed or angular velocity are modified, preferably smoothed with respect to time, before further handling.

12. Diagnostic method according to one of claims 1 to 11 characterised in that defined crankshaft angular positions spaced 1° apart are employed.

13. Diagnostic method according to one of claims 1 to 12 characterised in that the stored total energy in step c) is determined as $E_{total} = E_{kin} + E_{pot}$, in which in $E_{pot}$ the rotational oscillation behaviour of the engine as spring-stored energy in the elastic engine components and/or the geodetic height of the oscillating masses is taken into account.

14. Diagnostic method according to one of claims 1 to 13 characterised in that operating magnitudes for the relative compressions are determined from the course of the stored energy and are taken into account in the comparison according to step d).

15. Apparatus for diagnosis of internal combustion engines with a measuring arrangement for the continuous determination of cylinder-specific operating magnitudes which includes a measuring unit for the continuous measurement of the rotational speed or angular velocity of the engine as well as an associating unit connected to it for associating the respective measured results with defined crankshaft positions of the engine, and an evaluating device connected to it for evaluating, associating and displaying measured results representing individual cylinder performance, the evaluating device having a storage unit in which is contained a respective substitute moment of inertia I (α) of the engine for the defined crankshaft positions, and the evaluating device further including a coupling unit in which the respective total energy of the engine is determined, and a comparison unit being provided in the evaluating unit, in which the individual cylinder torques and performances are determined by comparison of these total energies in cylinder-specific crankshaft position ranges.

**16.** Apparatus according to claim 15 for engines with a flywheel mounted on one end of the crankshaft and having a starter ring, characterised in that there is arranged in the region of the starter ring of the flywheel of the engine under test an angular velocity sensor, preferably a contactlessly operating inductive proximity sensor co-operating with the teeth, and connected to the measuring unit.

**17.** Apparatus according to claim 16 characterised in that in addition a TDC sensor is provided on the flywheel and is connected to the associating unit.

**18.** Apparatus according to one of claims 15 to 17 characterised in that a modulating unit for the measured signal is inserted between the measuring and associating unit and the evaluating device.

**19.** Apparatus according to one of claims 15 to 18 characterised in that the engine under test is connected to a dynamometer for loading it with a load, preferably a respective known load.

**20.** Apparatus according to one of claims 15 to 19 characterised in that a separate arrangement for determining the relative compression of individual cylinders is provided on the engine and connected to the evaluating device.

## Revendications

**1.** Procédé de diagnostic pour des moteurs à combustion interne, en particulier pour des moteurs polycylindriques à combustion interne, dans lequel on réalise en continu des mesures des grandeurs caractéristiques spécifiques aux cylindres, et l'on détermine, par évaluation et affectation des données de mesure, les couples ou les puissances des cylindres individuels, caractérisé en ce que - pour chacune des positions définies d'angle de vilebrequin -:
a) on mesure sur au moins un composant du moteur à combustion interne la vitesse angulaire ω(α) ou le nombre de tours par unité de temps correspondant;
b) on forme à partir des données de construction du moteur à combustion interne un couple résistant image I(α) fonction de l'angle de vilebrequin, ce couple intégrant l'influence des masses oscillantes; et
c) on détermine l'énergie totale correspondante qui est stockée dans le moteur à combustion interne; et en ce que
d) à partir de la comparaison de ces énergies totales dans les zones d'angles de vilebrequin spécifiques aux cylindres, on détermine les couples ou les puissances des cylindres individuels.

**2.** Procédé de diagnostic selon la revendication 1, caractérisé en ce que l'énergie totale respective stockée dans le moteur à combustion interne et déterminée à l'étape c) d'après la relation $E_{tot} = E_{cin} + E_{pot'}$, est l'objet d'une évaluation approximative de l'énergie cinétique totale, en déterminant $E_{cin}$ par la relation $E_{cin} = \frac{I(\alpha)\cdot\omega^2}{2}$

**3.** Procédé de diagnostic selon la revendication 1 ou 2, pour des moteurs à combustion interne avec un volant d'inertie disposé à une extrémité du vilebrequin et présentant une couronne dentée de démarreur, caractérisé en ce que l'on mesure la vitesse angulaire à l'état a), sur la couronne dentée du volant d'inertie, de préférence au moyen d'une mesure inductive sans contact de proximité.

**4.** Procédé de diagnostic selon l'une des revendications 1 à 3, caractérisé en ce que l'on réalise l'affectation des vitesses angulaires ou des nombres de tours mesurés à chaque angle de vilebrequin, à l'aide d'une marque de déclenchement sur le vilebrequin et d'un signal d'allumage ou d'injection.

**5.** Procédé de diagnostic selon l'une des revendications 1 à 3, caractérisé en ce que l'on détermine l'apparition des positions angulaires caractéristiques de vilebrequin, de préférence du point mort haut, à partir des variations de la vitesse angulaire.

6. Procédé de diagnostic selon l'une des revendications 1 à 5, caractérisé en ce que l'on réalise la mesure à l'étape a) à pleine charge et à pleine accélération du moteur à combustion thermique non accouplé.

7. Procédé de diagnostic selon l'une des revendications 1 à 5, caractérisé en ce que l'on réalise la mesure à l'étape a) en marche de ralentissement naturel du moteur à combustion thermique, et/ou on détermine le frottement spécifique par cylindre du moteur, de préférence en tenant en plus compte, dans le cycle de pression de gaz, des pertes typiques pour le moteur qui sont, pour un type de moteur, estimées au banc une fois pour toutes.

8. Procédé de diagnostic selon l'une des revendications 1 à 5, caractérisé en ce que l'on réalise la mesure à l'étape a) sur un moteur à combustion thermique non accouplé pour des états de fonctionnement ou des variantes d'états de fonctionnement déterminés

9. Procédé en diagnostic selon l'une des revendications 6 et 7, caractérisé en ce que l'on détermine les couples individuels par cylindre qui correspondent, du point de vue de leurs somme, approximativement au moins au couple interne du moteur.

10. Procédé de diagnostic selon l'une des revendications 1 à 9, caractérisé en ce que l'on réalise la mesure sur un moteur à combustion interne chargé, en déterminant de façon supplémentaire la charge normale du moteur en vue de la détermination des valeurs absolues des couples des cylindres individuels.

11. Procédé de diagnostic selon l'une des revendications 1 à 10, caractérisé en ce que les valeurs de mesure des vitesses angulaires ou des nombres de tours par unité de temps sont mises en forme, de préférence par lissage numérique de leur profil temporel, avant leur traitement ultérieur.

12. Procédé de diagnostic selon l'une des revendications 1 à 11, caractérisé en ce que l'on utilise des positions d'angle de vilebrequin définies avec des écarts de 1°.

13. Procédé de diagnostic selon l'une des revendications 1 à 12, caractérisé en ce que l'on détermine l'énergie totale stockée à l'étape c) correspondant à $E_{tot} = E_{cin} + E_{pot}$, en prenant en compte dans $E_{pot}$ le rapport d'oscillation de torsion du moteur comme énergie à stockage élastique dans les éléments élastiques du moteur et/ou la hauteur géodésique des masses oscillantes.

14. Procédé de diagnostic selon l'une des revendications 1 à 13, caractérisé en ce qu'à partir des variations de l'énergie stockée, on détermine les grandeurs caractéristiques de fonctionnement pour la compression relative et on en tient compte lors de la comparaison à l'étape d).

15. Dispositif de diagnostic de moteur à combustion interne, muni d'un organe de mesure pour la détermination en continu des valeurs caractéristiques de fonctionnement spécifiques aux cylindres, comportant une unité de mesure pour la mesure en continu de la vitesse angulaire ou du nombre de tours par unité de temps du moteur à combustion interne et muni d'un organe d'évaluation qui lui est relié, pour attribuer chaque donnée de mesure à des positions d'angle de vilebrequin définies du moteur à combustion interne, ainsi que muni d'une unité d'affectation qui lui est reliée, pour réaliser l'évaluation, l'affectation et l'affichage des données de mesures représentatives de la puissance individuelle par cylindre et présentant une unité de mémoire qui contient, pour les positions d'angle de vilebrequin définies, un couple correspondant image I(a) du moteur à combustion interne, en où l'unité d'évaluation contient en outre une unité de combinaison, dans laquelle est déterminée l'énergie totale correspondante du moteur à combustion interne, en ce qu'il comporte dans l'unité d'évaluation une unité de comparaison, dans laquelle sont déterminés, par comparaison de ces énergies totales dans ces zones d'angle de vilebrequin spécifiques aux cylindres, les couples ou les puissances des cylindres individuels.

16. Dispositif selon la revendication 15 pour des moteurs à combustion interne muni d'un volant monté à une extrémité du vilebrequin et présentant une couronne dentée de démarreur, caractérisé en ce que, dans la zone de la couronne dentée du volant du moteur à combustion interne à tester, est disposé et relié à l'unité de mesure un capteur de vitesse angulaire coopérant avec la denture, avantageusement un capteur inductif de proximité, fonctionnant sans contact.

17. Dispositif selon la revendication 16, caractérisé en ce qu'il comporte en outre un capteur de point mort haut sur le volant et qui est relié à l'unité d'affectation/attribution.

**18.** Dispositif selon l'une des revendications 15 à 17, caractérisé en ce qu'il comporte une unité de préparation du signal de mesure qui est intercalée entre l'unité de mesure ou d'affectation et le dispositif d'évaluation.

**19.** Dispositif selon l'une des revendications 15 à 18, caractérisé en ce que le moteur à combustion interne à tester est relié à un organe de mise en charge pour l'application d'une charge, de préférence connue dans chaque cas.

**20.** Dispositif selon l'une des revendications 14 à 19, caractérisé en ce qu'il comporte un agencement séparé pour la détermination de la compression relative du cylindre individuel sur le moteur à combustion interne et qui est relié à l'unité d'évaluation.

Fig. 1A

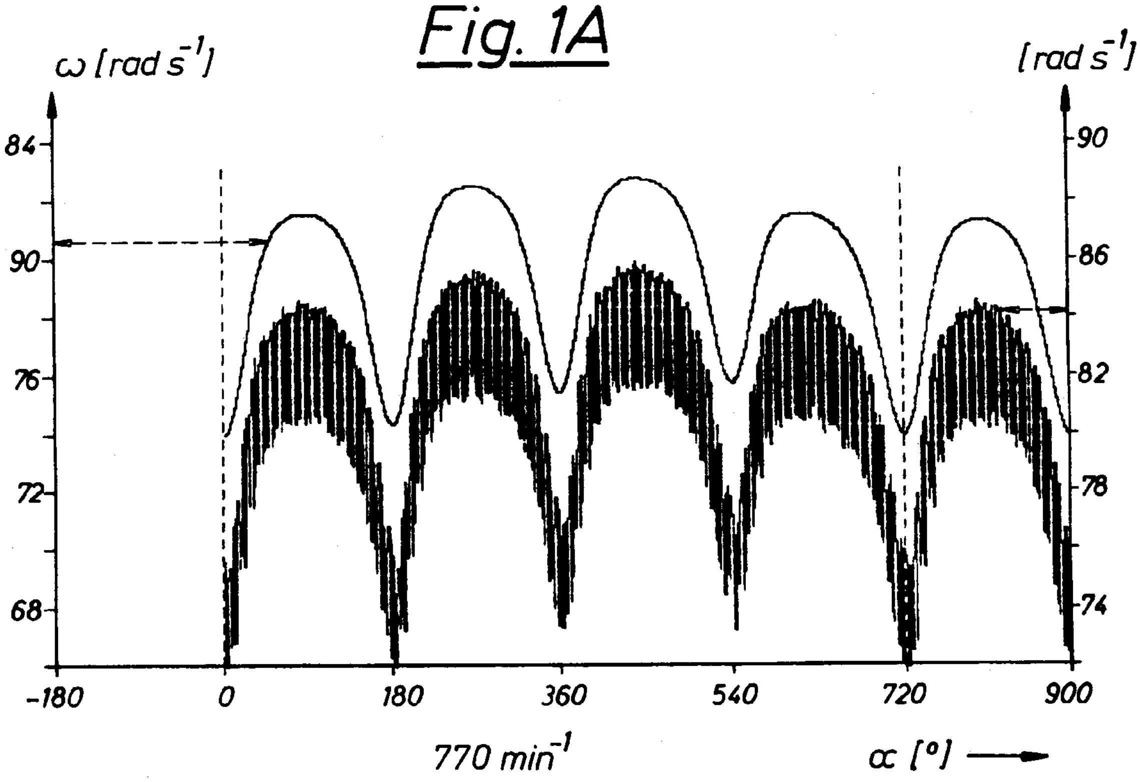
ω [rad s⁻¹]
[rad s⁻¹]
84
90
76
72
68
90
86
82
78
74
-180
0
180
360
540
720
900
770 min⁻¹
α [°]

Fig. 1B

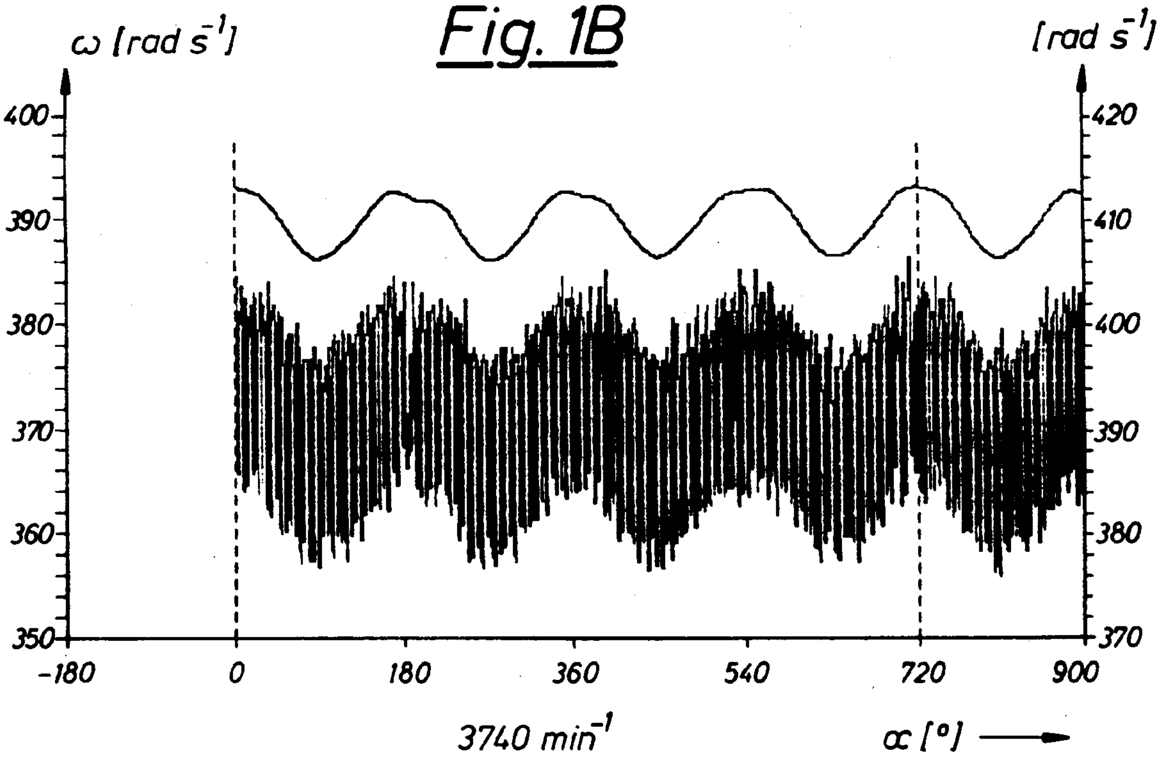
ω [rad s⁻¹]
[rad s⁻¹]
400
390
380
370
360
350
420
410
400
390
380
370
-180
0
180
360
540
720
900
3740 min⁻¹
α [°]

Fig. 2A

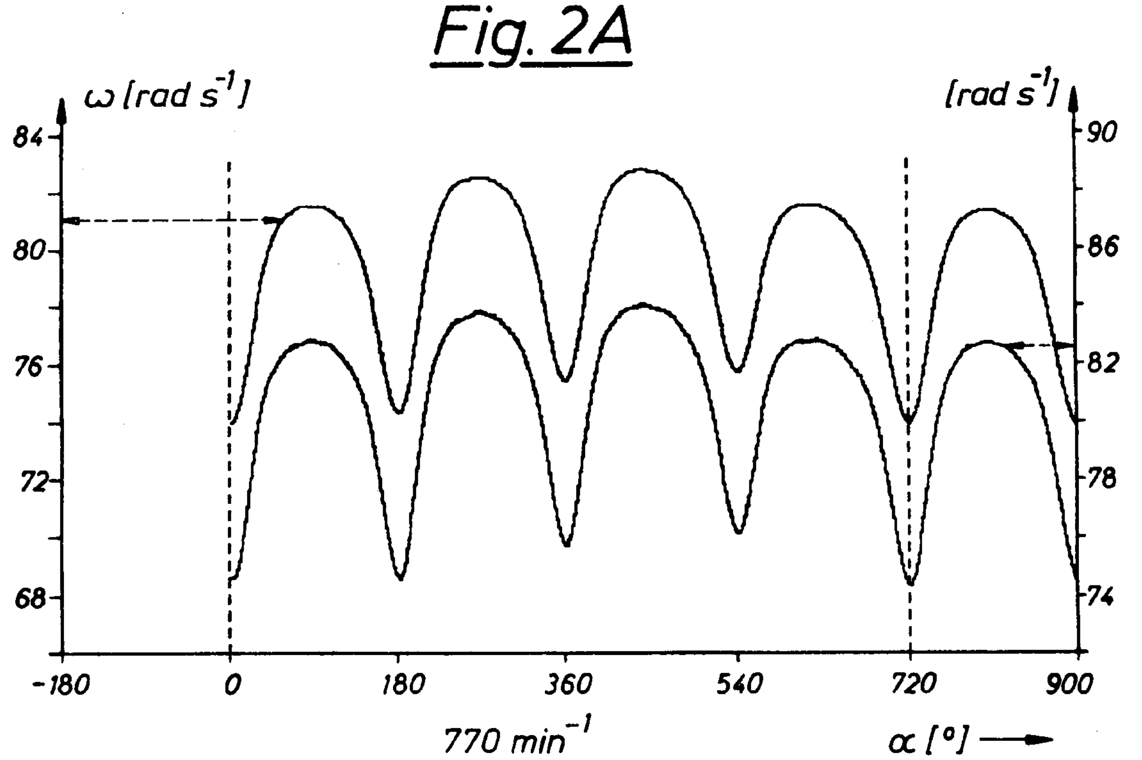
ω [rad s⁻¹]
[rad s⁻¹]
84
80
76
72
68
90
86
82
78
74
-180
0
180
360
540
720
900
770 min⁻¹
α [°]

Fig. 2B

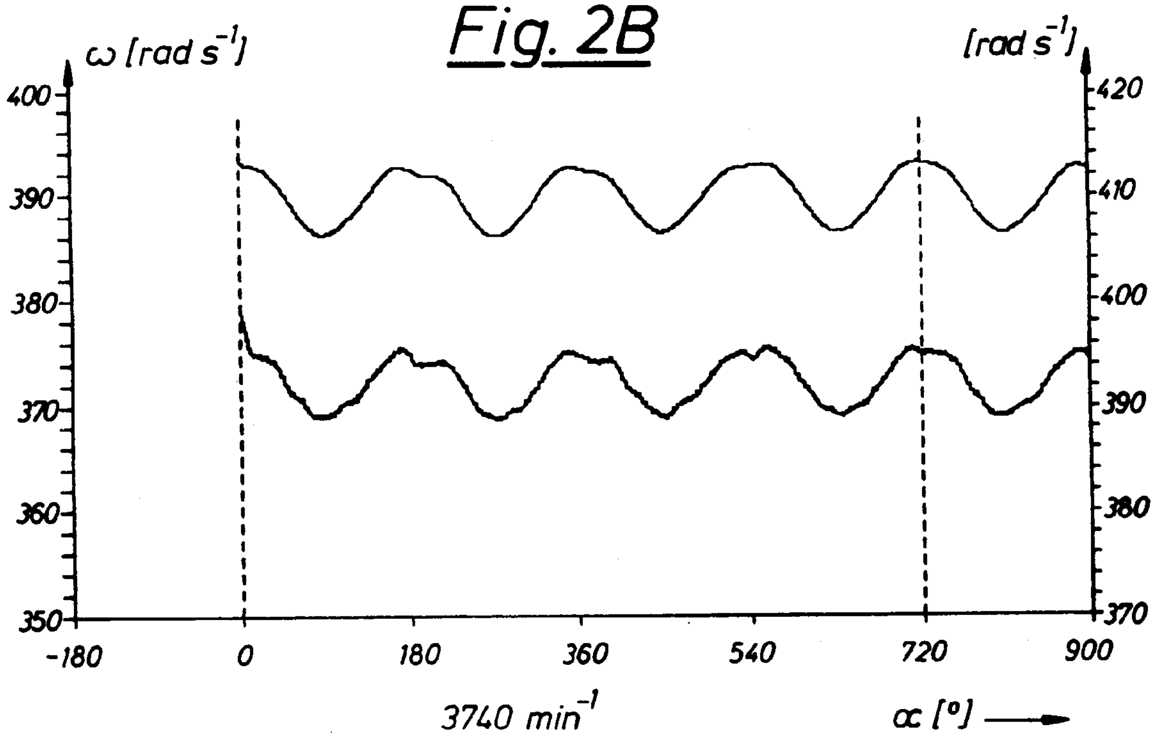
ω [rad s⁻¹]
[rad s⁻¹]
400
390
380
370
360
350
420
410
400
390
380
370
-180
0
180
360
540
720
900
3740 min⁻¹
α [°]

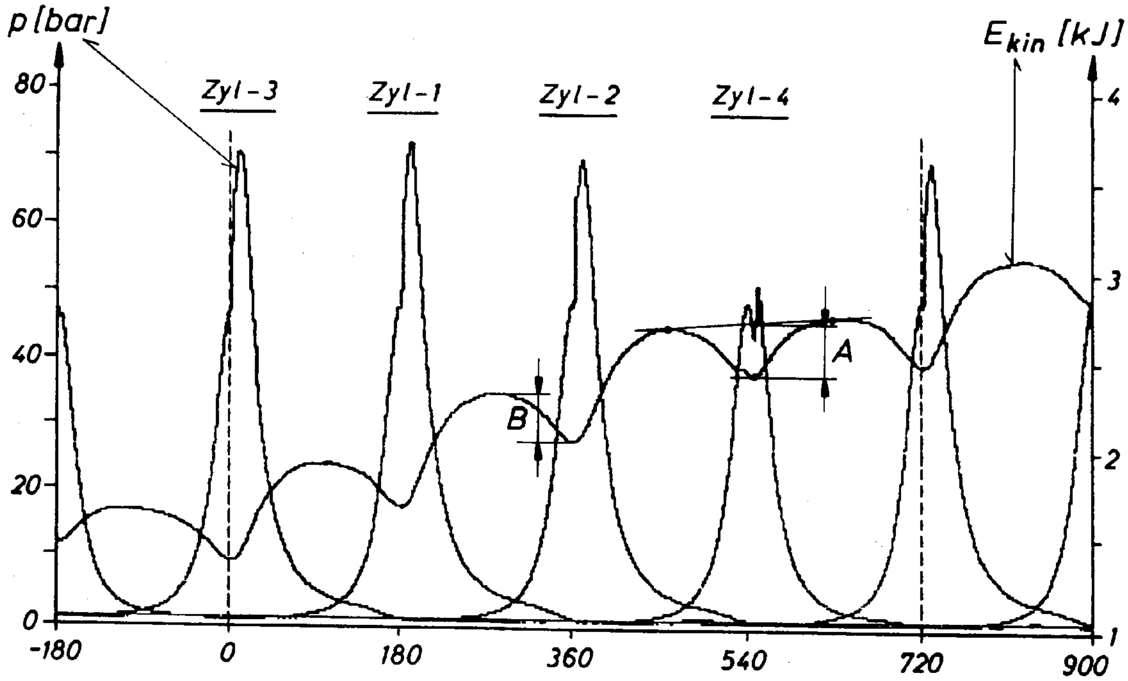
p [bar]
Ekin [kJ]
Zyl-3
Zyl-1
Zyl-2
Zyl-4
80
60
40
20
0
4
3
2
1
A
B
-180
0
180
360
540
720
900
α [°]

Fig. 4A

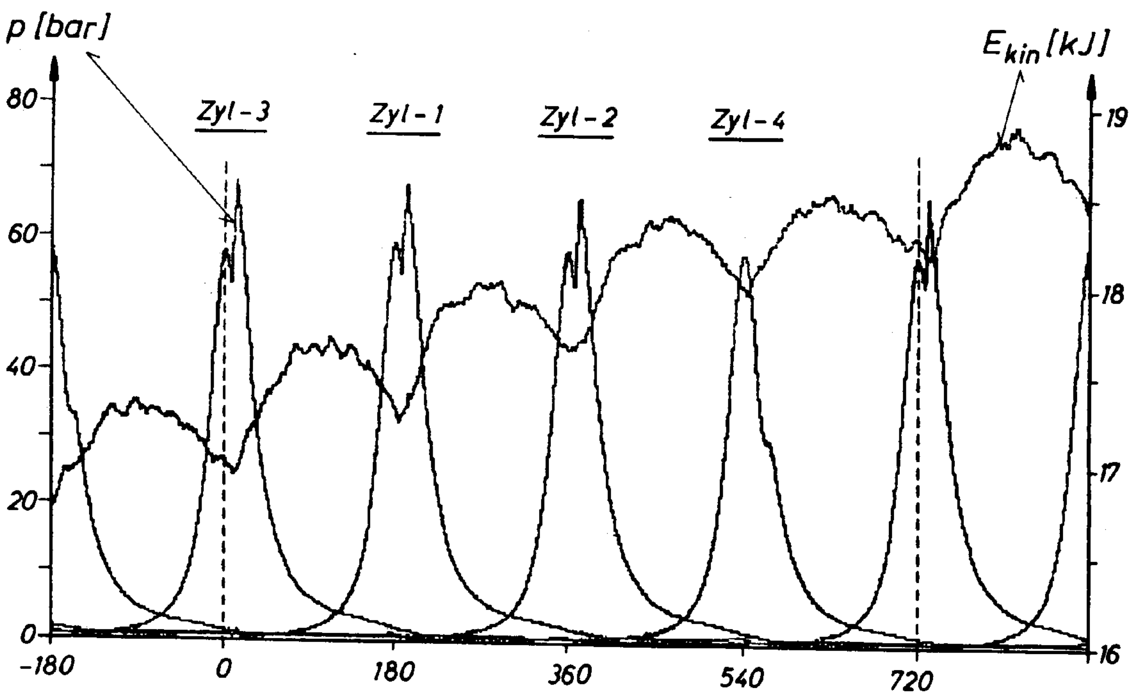
p [bar]
Ekin [kJ]
Zyl-3
Zyl-1
Zyl-2
Zyl-4
80
60
40
20
0
19
18
17
16
-180
0
180
360
540
720
α [°]

Fig. 4B

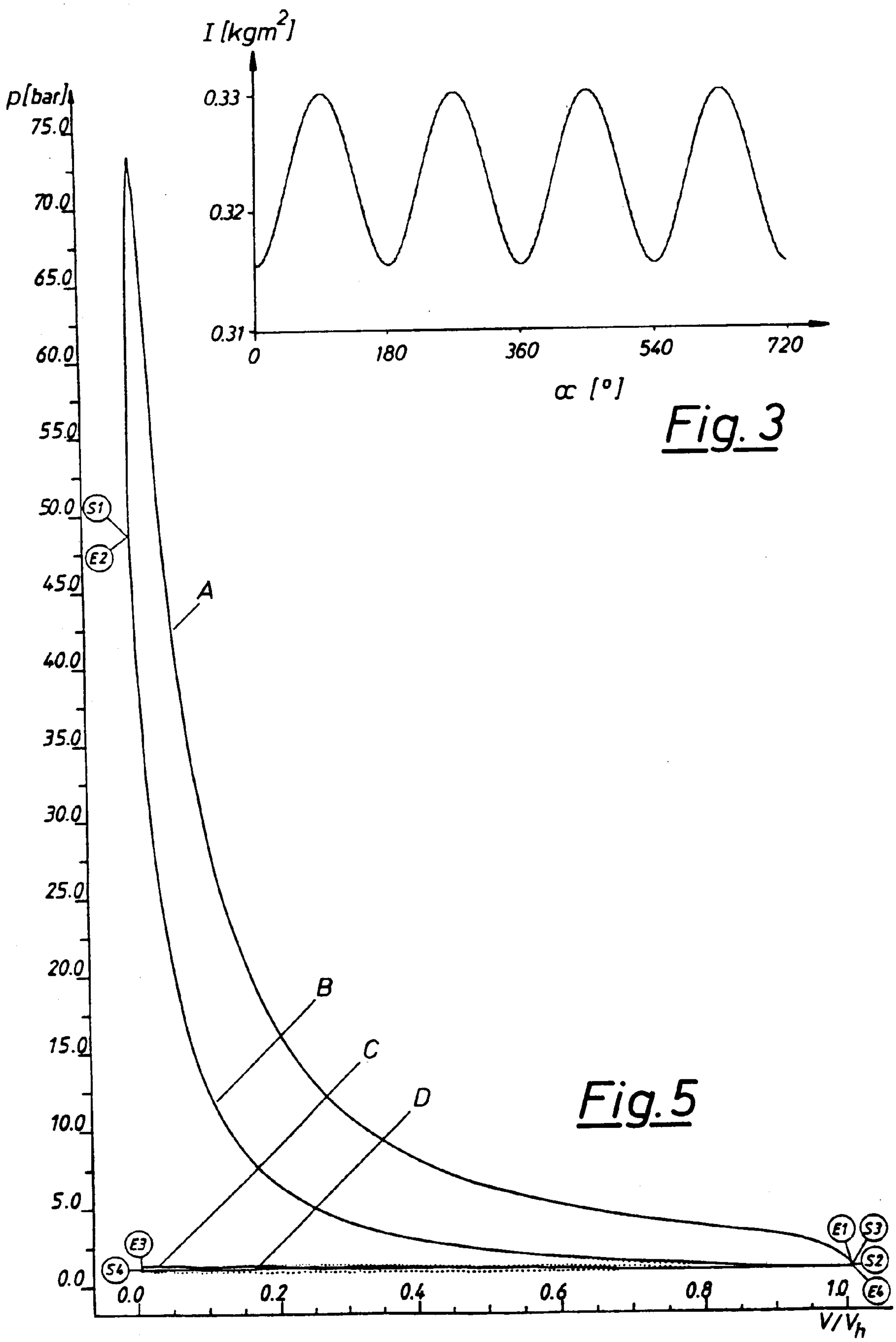
I [kgm²]
0.33
0.32
0.31
0
180
360
540
720
α [°]
p[bar]
75.0
70.0
65.0
60.0
55.0
50.0
45.0
40.0
35.0
30.0
25.0
20.0
15.0
10.0
5.0
0.0
S1
E2
A
B
C
D
E3
S4
E1
S3
S2
E4
0.0
0.2
0.4
0.6
0.8
1.0
V/Vh

Fig. 3

Fig.5

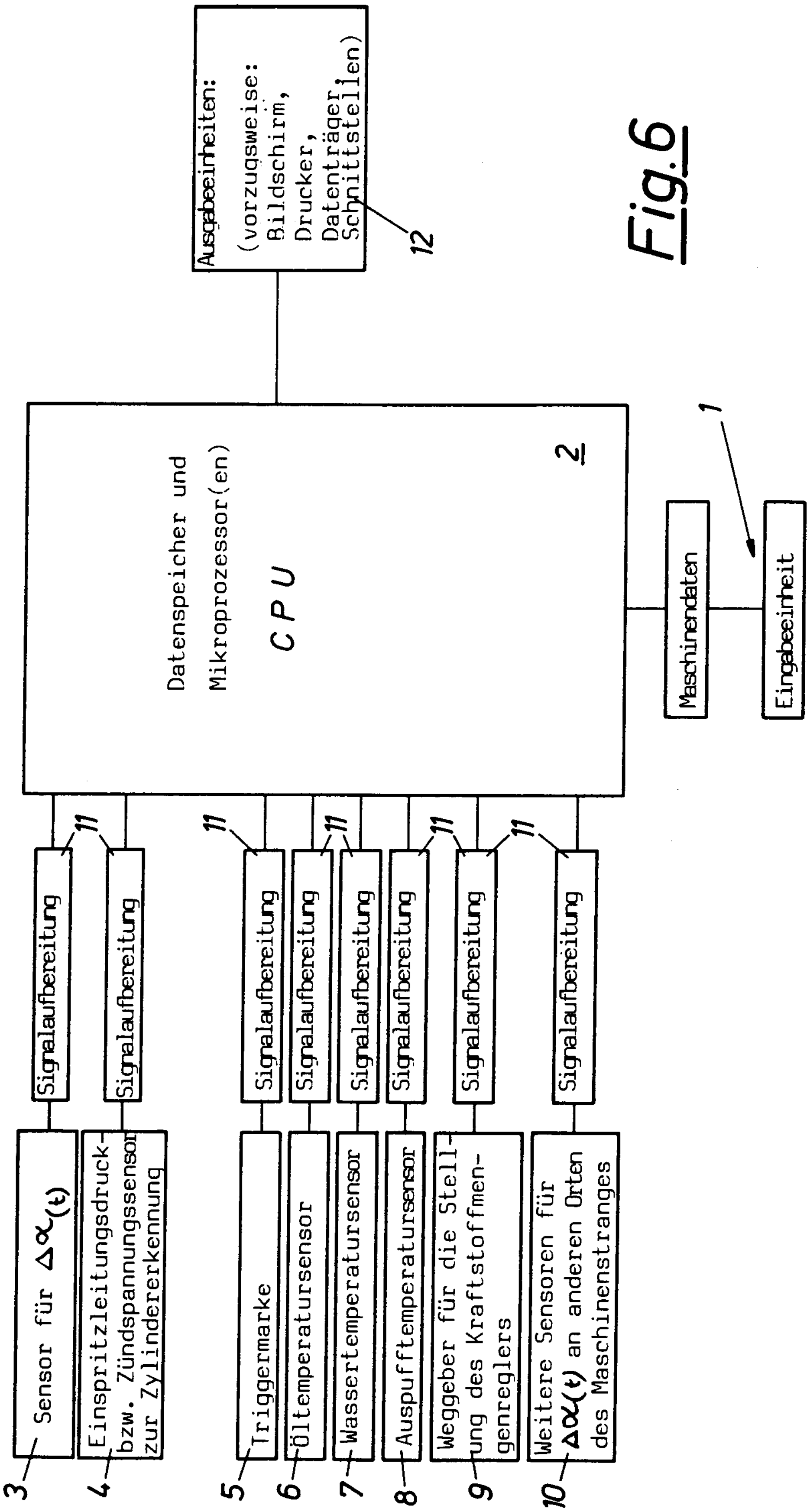
Ausgabeeinheiten:
(vorzugsweise:
Bildschirm,
Drucker,
Datenträger,
Schnittstellen)
12
Datenspeicher und
Mikroprozessor(en)
C P U
2
1
Maschinendaten
Eingabeeinheit
11
Signalaufbereitung
Sensor für Δα(t)
Einspritzleitungsdruck-
bzw. Zündspannungssensor
zur Zylindererkennung
Triggermarke
Öltemperatursensor
Wassertemperatursensor
Auspufftemperatursensor
Weggeber für die Stell-
ung des Kraftstoffmen-
genreglers
Weitere Sensoren für
Δα(t) an anderen Orten
des Maschinenstranges
3
4
5
6
7
8
9
10

Fig.6